# EUROPEAN PATENT APPLICATION

(11) **EP 2 535 562 A1**
(43) Date of publication of application: **19.12.2012**
(21) Application number: 10844998.4
(22) Date of filing: 28.06.2010
(51) Int. Cl.: F03D 3/04, F03D 7/06

(54) **DISPLACEMENT MECHANISM OF ENERGY-INCREASING WING FOR VERTICAL AXIS WIND POWER GENERATOR**

(30) Priority: 08.02.2010 CN 201019114069
(71) Applicant: National Wind Energy Co. Ltd., Pinggu District, Beijing 101206 (CN)
(72) Inventor: JIANG, Dalong, Beijing 101206 (CN); SHENG, Mingfan, Beijing 101206 (CN); XU, Jinquan, Beijing 101206 (CN)
(74) Representative: Lambert, Ian Robert
(86) International application number: PCT/CN2010/000958
(87) International publication number: WO 2011/094913

(57) **Abstract**

The present invention provides a booster airfoil displacement mechanism of a vertical axis wind turbine, which includes a support device and a drive unit, the support device is provided on a fixed frame, also provided on the support device is a connecting structure of the booster airfoil that is used for connecting the said booster airfoil and place it outside of the maximum rotating circumferential locus of the rotor blades of the wind turbine, in addition, the wind shielding surface of the booster airfoil corresponds with the blades in a portion of the side surface of the rotor, enabling the booster airfoil to shield the part of blades in the rotor on the windward side where rotational resistance occurs due to action of air stream from the incoming wind in service; The drive unit is placed on a fixed frame, and it is also connected with the support device, making the support device to displace, enabling the wind shielding surface of the said booster airfoil on it to shield different side surfaces of the said rotor. The revolving mechanism for the booster airfoil of the vertical axis wind turbine provided by the present invention is of reasonable and simple structure, which can easily drive the booster airfoil to rotate according to the changes in wind direction and velocity, and through adjusting the relative position between the booster airfoil and the rotor of the wind turbine, the efficiency of the wind turbine can be improved.

## Description

### Technical field

Relating to the technical field of wind turbine, the present invention provides a structural element used in vertical axis wind turbine, in particular, a displacement mechanism for the booster airfoil used in vertical axis wind turbine complete with booster airfoil.

### Background art

In prior art, vertical axis wind turbine is increasingly display its such advantages as high efficiency, high power as well as easy installation and use, long service life, etc. However, when the rotor is driven to rotate by the wind, the revolution speed of the rotor does not increase in direct proportion to the wind force, which is more apparent when the wind force is not as big, the reason is that when the air stream of the incoming wind strikes the rotor, what is received on its windward side is an effective pushing force enabling the rotor to rotate, while on the other side, what is received is a resistance to hinder the rotor from rotating, the resultant force from the aforementioned two kinds of force is the effective force driving the rotor to rotate and do work. Since the presence of wind resistance on the windward side obviously decreases the effective wind receiving performance of the vertical axis wind rotor as well as the efficiency of the wind turbine as a whole.

In prior art, a method for solving this project is to provide a flow guiding device on the windward side of the rotor, making the incoming wind to blow at the rotor and push the rotor to rotate along the channel provided by the flow guiding device, thus, a flow guiding wind field is formed. This method of introducing the natural wind into a flow guiding channel and then driving the rotor blades to eliminate the wind resistance has a shortcoming of weakened wind force of the natural wind, in the meantime, the direction of natural wind is subject to frequent change, thus, if the flow guiding device cannot change its guiding direction according to the wind directions, the wind energy loss brought about by the flow guiding device will be even higher, if a flow guiding device is designed to change the flow guiding direction according to the varying wind direction, the structure of such flow guiding device is bound to become complex, which will bring about inconvenience for the use, management and maintenance in the particular and also often harsh environment such as a wind farm, etc.

The applicant of the present application has developed a technology of overcoming the moment of wind resistance, according to this technology a booster airfoil is provided in front of the rotor on the windward side of the rotor where the moment of resistance is produced, which is able to block the air stream from acting on the blades. This part of the wind flow field is cut off by the said booster airfoil. In the way, the rotating performance of the rotor and the power generating capacity and efficiency of the wind turbo-generator may be improved obviously. The direction of wind in the nature keeps varying all the time, thus, the position of the booster airfoil in relation to the blade should also change accordingly. In addition, when the wind force is relatively high, the proportion of the moment of resistance to the effective pushing force produced for the rotor will be very small, and it is no longer necessary to provide a booster airfoil in front of the rotor blades. At this point, it is necessary to move the booster airfoil from the windward side of the rotor to the leeward side or downstream side of the rotor, or simply away from the rotor.

### Description of the present invention

The purpose of the present invention is to provide a displace mechanism for the booster airfoil of vertical axis wind turbine, which allows for easy change of the booster airfoil positions and has simplified structure.

A rotor of vertical axis wind turbine that is revolveably fixed on a center pylon of a vertical axis and connected with the rotor of a power generator unit, on which are also provided a number of blades, and it also includes a booster airfoil which is a wind shielding piece that has a wind shielding surface, the said booster airfoil is provided on a support device and used to correspond with one side surface of the rotor in a vertical axis wind turbine, such side is a part of the windward surface of the said rotor in use, and the rotor blades in correspondence with this part of the windward surface are hindered from rotating due to the action of air stream from the incoming wind, and the said booster airfoil enables this side surface to be shielded.

The said displacement mechanism provided by the present invention makes this support device to be displaceable so as to accommodate for the operation of the rotor of the wind turbine.

Therefore, the booster airfoil displacement mechanism of vertical axis wind turbine provided by the present invention includes a support device and a drive unit, the said support device is provided on a fixed frame, also provided on the support device is a connecting structure of the said booster airfoil that is used for connecting the said booster airfoil and place it on the support device in a manner without blocking the rotation of the rotor on the said vertical axis wind turbine, and a wind shielding surface on the booster airfoil corresponds with one side surface of the rotor in the said vertical axis wind turbine, and such side surface is a part of the windward side of the rotor in use, the rotor blades in correspondence with this part of the windward surface suffer a rotational resistance due to the action of the air stream from the incoming wind, and the said booster airfoil enables such side surface to be shielded;

The said drive unit is placed on the said fixed frame, and it is also connected with the support device, making the said support device to displace, enabling the wind shielding surface of the said booster airfoil on it to shield different side surfaces of the said rotor.

The said support device may be as such: the support device includes two knightheads, and one ends of which are respectively connected with the upper and lower ends of the said booster airfoil via the said connecting structure, and their lengths are so designed that the said booster airfoil is located outside the maximum rotating circumferential locus of the said rotor blade of the said wind turbine, while the other ends of the two knightheads are revolveably connected with a static center pylon of the said rotor of the said wind turbine, or the said fixed frame, through a revolveable connecting structure; and the said drive unit is connected with the said connecting structure revolveably connected with the said center pylon of one of the said knightheads in order to drive the said knighthead to rotate around the said center pylon.

The said support device may also be a support, on which a fixation structure is provided for the said booster airfoil, allowing the booster airfoil device to be placed on the support, the said support device is placed on the said fixed frame formed by the foundation near the rotor of the said vertical axis wind turbine, making the said booster airfoil to be outside the rotating circumferential locus of the said rotor blade; the said drive unit is installed on the said support or fixed frame, for driving the said support to displace in relation to the said foundation;

A controller may be connected on the starting component of the said drive unit in order to control the on/off of the drive unit.

The said knighthead includes two sections, of which the section near the said booster airfoil is a single knighthead section, one end of which is connected with the said booster airfoil, while the other section is a double-knighthead section comprising two secondary knightheads, and at one end of the these two secondary knightheads are provided with the said revolveable connecting structures for revolveable connection with the said center pylon; a T-joint connector is provided between the said single-knighthead section and the two secondary knightheads, and three connecting pieces are provided on this T-joint connector, which are distributed in Y-shape, one connecting piece on one side connects with the other end of the said single-knighthead section, and the other two connecting pieces on the other side of the T-joint connector are respectively connected with the other ends of the said two secondary knightheads.

The connecting structure between the said knighthead and the said booster airfoil may be as such: the connecting structure includes one main connector on which two holes are provided, and the relevant end of the said knighthead or single-knighthead section is inserted and fixed in one of the holes while into the other hole is inserted and fixed the upper end or lower end of the said booster airfoil.

The said support device may also comprise a diagonal drawbar, one end of which is provided a connecting structure that is fixed with the upper end of the said booster airfoil while the other end is provided with a revolveable connecting structure that is revolveably connected with the said center pylon, and the position of the connecting structure for connecting the said diagonal drawbar and the said center pylon is higher than the said connecting structure for connecting the knighthead connected at the upper end of the booster airfoil and the said center pylon.

The said revolveable connecting structure connecting the said diagonal drawbar with the said center pylon is placed on the top of the said center pylon.

The said revolveable connecting structure connecting the said diagonal drawbar with the said center pylon is a bearing assembly, and the inner race and one of the outer rings relatively revolveable in the bearing assembly are connected with the said knighthead or diagonal drawbar while the other is used for fixation on the said center pylon.

The said revolveable connecting structure connecting the said knighthead with the said center pylon is a bearing assembly, the said knighthead or secondary knighthead is connected with the outer ring of the said bearing, and a outer sleeve is fixed on the outside of the said outer ring, in which a hole is provided, and the end of the said knighthead or secondary knighthead is inserted and fixed in the said hole.

The cross-section of the said knighthead is an ellipse and the long axis of this elliptical cross-section is placed in the horizontal direction; or, the cross-section of the single-knighthead section and/or the secondary knighthead is an ellipse, and the long axis of this elliptical cross-section is placed in the horizontal direction; and/or the cross-section of the diagonal drawbar is of an elliptical form, and the long axis of this elliptical cross-section is placed in the horizontal direction.

Preferably, the ratio of short axis to long axis of the said elliptical cross-section of the various knighthead, single-knighthead section and/or secondary knighthead is within the range of 1/2∼3/4.

Preferably, the material for fabricating the said knighthead and the various components should be aluminum profiles or aluminum castings, and lightweight aluminum profiles and aluminum castings are the best.

The displacement mechanism for the booster airfoil of the vertical axis wind turbine provided by the present invention is of reasonable and simple structure, which can easily drive the booster airfoil to rotate according to the changes in wind direction and velocity, and through adjusting the relative position between the booster airfoil and the rotor of the wind turbine, the efficiency of the wind turbine can be improved.

### A brief description of drawings

Fig. 1 is a front structural schematic view illustrating the displacement mechanism for the booster airfoil of the vertical axis wind turbine provided by the present invention as well as the rotor type booster airfoil connected thereon;
Fig. 2 is a top structural schematic view of Fig. 1;
Fig. 3 is a bottom structural schematic view of Fig. 1;
Fig. 4 is a bottom structural schematic view of the flat-plate type booster airfoil provided on the rotor of vertical axis wind turbine;
Fig. 5 is a top structural schematic view of the rotor type booster airfoil provided on the rotor of vertical axis wind turbine;
Fig. 6 is a front structural schematic view of a vertical axis wind turbine complete with booster airfoil provided by Fig. 5;
Fig. 7 is a structural schematic view of the main connector used for connecting the knighthead with the booster airfoil.

### Detailed description of the preferred embodiments

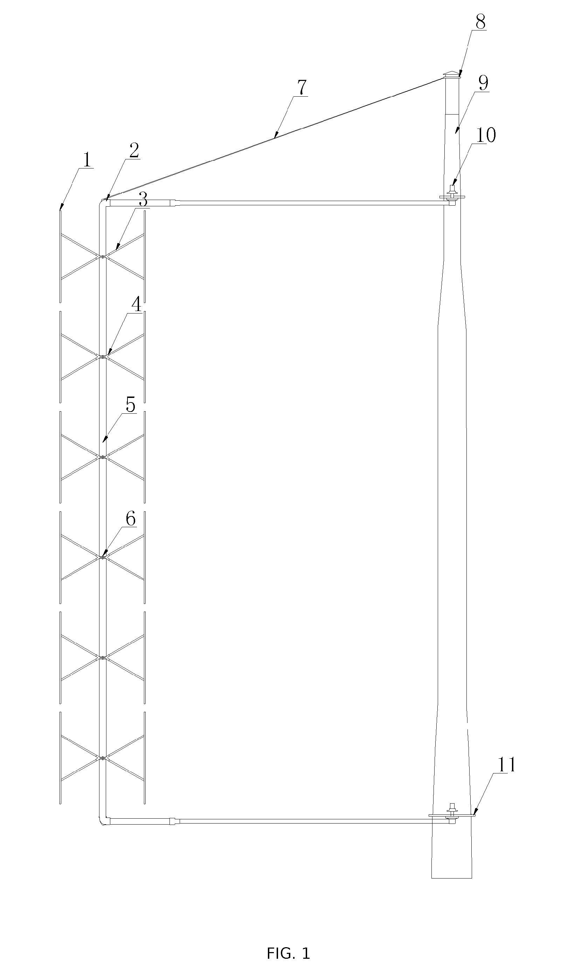

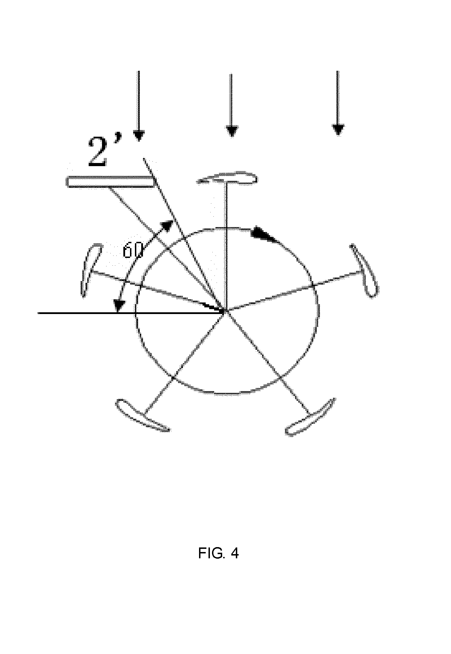

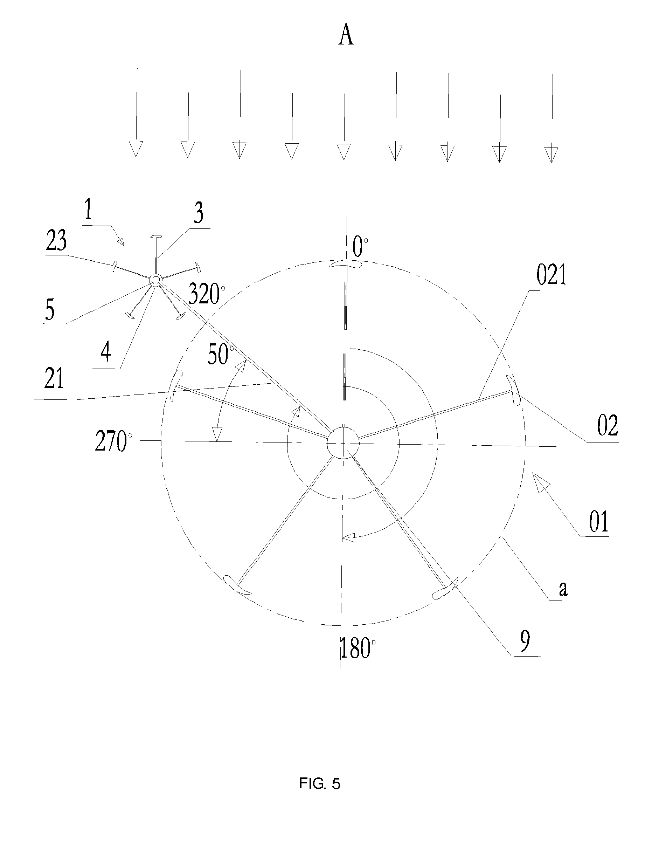

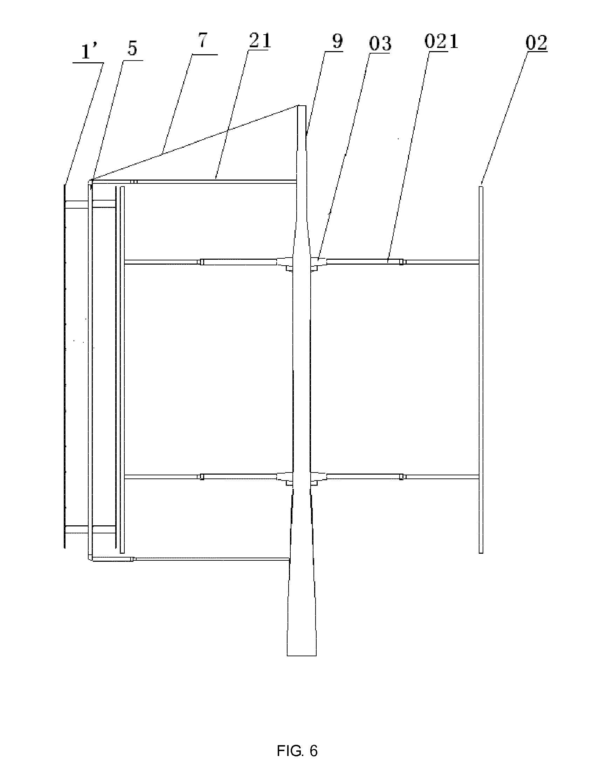

The booster airfoil displacement mechanism of vertical axis wind turbine provided by the present invention shall be used in conjunction with the following booster airfoil as well as the matching rotor of vertical axis wind turbine, and the said vertical axis wind turbine is as shown in Figs. 5 and 6, which includes a rotor 01 with vertical blades that is revolveably fixed on a center pylon 9 (as shown in Fig. 1), also provided on the rotor are a number of blades 02, and the blades 02 on the said vertical blade rotor 01 are connected to the rotor hub by at least two knightheads 05, and the hubs connected by at least one knighthead are connected with the rotor in the power generator unit while other rotor hubs that are not connected with the power generator unit are revolveably placed on pylon 9. Meanwhile, the stator corresponding with the rotor of the power generator is also fixed on pylon 9. This blade 02 is a vertical cylindrical object whose horizontal cross-section is of the section form of an airplane wing, ie., with respect to the rotor revolution axis, its outer side surface and the windward end face form a smooth transitional streamline cambered surface, and the spacing of the windward surfaces of the blade is relative big, which gradually reduces along the leeward direction, and the various horizontal cross-sections of said cylindrical object are the same in size and form in vertical direction (as shown in Figs. 5 and 6). Also included is a booster airfoil, which may either be a flat-plate type booster airfoil 2' (see Fig. 4) or a rotor type booster airfoil 20 (see Figs. 1, 5 and 6). Two connecting shafts may be provided at the top and the bottom of the plate-type booster airfoil 2' , and the face of the flat plate is exactly the wind shielding surface.

A rotor type booster airfoil may be a vertical rotor that is revolveably placed on a rotor axis 5, on this rotor axis 5 may be provided a rotor 1' (see Fig. 6) or multiple rotors 1 (see Fig. 1). In rotor 1 or 1' , blade 23 is fixed with the hub 4 via connecting rod 3, and hub 4 is circularly placed on rotor axis 5, and bearing 6 is provided between hub 4 and rotor axis 5.

The said rotor type booster airfoil is placed on a booster airfoil displacement mechanism. This displacement mechanism comprises a support device and a drive unit, and the said support device is placed on a fixed frame, also provided on the said support device is a connecting structure for fixation of the said booster airfoil, so that the said booster airfoil can be placed outside of the maximum rotating circumferential locus a (see Fig. 5) of the rotor blades of the said wind turbine, and that the wind shielding surface of the booster airfoil corresponds with blade 02 on a part of the side surface of the said rotor 01, enabling the said booster airfoil to shield the blades of the said rotor on the windward side receiving incoming wind where the rotation is hindered by the air stream during operation; the said drive unit is placed on the said fixed frame, which is connected with the said support device, so that the displacement of the support device would enable the wind shielding surface of the said booster airfoil installed thereon to block different side surfaces of the said rotor. In order to accommodate for the changes in wind direction and wind force, the positional relation between the said booster airfoil and the rotor should be varied accordingly.

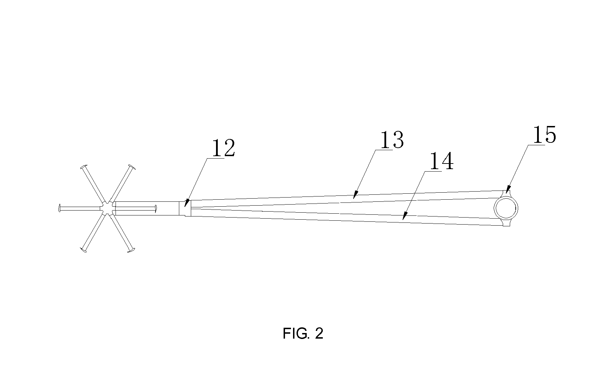

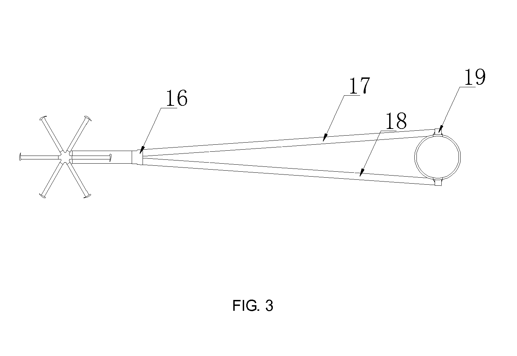

Specifically as shown in Figs. 1, 2, 3, 4, 5 and 6, the upper and lower ends of rotor axis 5 of booster airfoil rotor 1 are respectively fixed on one end of the upper and lower knightheads 21, while the other end of these two knightheads are revolveably fixed on center pylon 9, and these two knightheads are respectively located above and under the said vertical rotor blade 02, and the booster airfoil is a wind shielding object which is located outside of the rotating circumferential locus a of the said rotor blades so that it will not interfere with the rotation of the rotor with vertical blades, and since it is also located in front of the windward surface of the rotor, it blocks the windward side of the rotor, and further shield the side of vertical rotor of the wind turbine where air stream A of the incoming wind is received and the rotational resistance is suffered. A drive unit is connected on the connecting structure of one of the knightheads for connecting with center pylon 09 or the aforesaid fixed frame in order to drive the said knighthead to rotate around the center pylon, and further drive the said booster airfoil to rotate in order to vary the positional relation between the said booster airfoil and the rotor, accommodating for the change in wind direction.

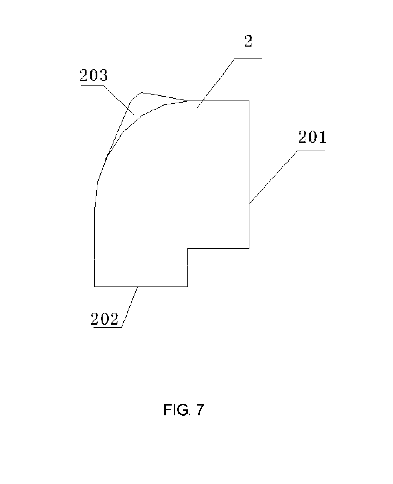

The connecting structure between knighthead 21 and the said booster airfoil is as such: it includes one main connector, as shown in Fig. 7, there are two holes 201 and 202 on the main connector, the relevant end of knighthead 21 is inserted and fixed one of the holes while the other hole is used for inserting and fixing the upper end or the lower end of the said booster airfoil.

The said revolveable connecting structure connecting the said knighthead with the said center pylon is a bearing assembly, and the inner race and one of the outer rings relatively revolveable in the bearing assembly are connected with the said knighthead or secondary knighthead or diagonal drawbar while the other outer ring is used for fixation on the said center pylon.

In the present specific embodiment, the knighthead is connected with the outer ring of the bearing, and their specific connecting structure can be as such: the knighthead is connected with the outer ring of the bearing via a knighthead connector, and this knighthead connector may be a outer sleeve provided on the outside of the said outer ring, and holes are provided on the said outer sleeve, ends of the said knighthead are inserted into the holes and fixed by using fastening screws.

As shown in Figs. 1, 2 and 3, the said knighthead may also include two sections, of which the section near the said booster airfoil is a single knighthead section whose one end is connected with the said booster airfoil via the aforesaid main connector, and the other section is a double-knighthead section comprising two secondary knightheads, for example, secondary knightheads 13 and 14 in the knighthead fixed at the upper end of the booster airfoil as well as the secondary knightheads 17 and 18 in knighthead fixed at the lower end of the booster airfoil, and one end of these two secondary knightheads may also be fixed with the outer ring of bearing 11 through the aforesaid structure, and the secondary knightheads 13 and 14 may be fixed with the outer ring of bearing 11 through knighthead connector 15, and the secondary knightheads 17 and 18 are fixed with the outer ring of bearing 11 via the knighthead connector 19, in other words, two holes are made at relevant positions on the side wall of the knighthead connectors 15 and 19, into which the ends of two secondary knightheads of one knighthead are inserted and fixed, in this manner, it is revolveably connected with the said center pylon; a T-joint connector 12 and 16 is provided between the said single-knighthead section and the two secondary knightheads, and three connecting pieces are provided on this T-joint connector, which are distributed in Y-shape, one connecting piece on one side connects with the other end of the said single-knighthead section, and the other two connecting pieces on the other side of the T-joint connector are respectively connected with the other ends of the said two secondary knightheads.

The aforesaid knighthead comprising two secondary knightheads may decompose the gravity force supported by them and the resistance received by them, such structure has a higher strength and rigidity over the knighthead comprising single-knighthead. Under the same gravity force and resistance, the knightheads of such structure can be made more slender, thus, the resistance of the rotor can be further reduced.

As shown in Fig. 1, a drive unit 10 can be connected on the outer ring of the bearing connected by the upper knighthead, which drives the outer ring of the said bearing to rotate. The said drive unit is provided and fixed inside the hollow center pylon, which can be a motor whose output axis is connected with the outer ring of the bearing. The electric energy input of the motor can be connected with a power grid. It may also be connected with the storage mechanism provided on the present wind turbine, which can obtain electricity from the wind turbo-generator, it may also be a power generation unit provided between the rotor of the rotor type booster airfoil and the rotor axis, where the rotor can also be used as a power generator while being used as a booster airfoil for shielding relevant blades, and the electric energy generated is stored in the storage mechanism and later used for driving the revolving mechanism of the booster airfoil.

The said supporting device may also comprise a diagonal drawbar, one end of which is provided a connecting structure that is fixed with the upper end of the said booster airfoil while the other end is provided with a revolveable connecting structure that is revolveably connected with the said center pylon, and the position of the connecting structure for connecting the said diagonal drawbar and the said center pylon is higher than the said connecting structure for connecting the knighthead connected at the upper end of the booster airfoil and the said center pylon.

Specifically as shown in Figs. 1 and 6, a reinforcing rib 203 (see Fig. 7) is provided in the upper part of the main connector 2 that is connected at the upper end of the rotor axis 5 of the booster airfoil 1, and on the said reinforcing rib 203 is provided a connecting structure for fixing one end of the diagonal drawbar 7, and the other end of the said diagonal drawbar extents to the center pylon 9 along the upper inclined direction to connect with a diagonal drawbar bearing 8 located on top of the pylon 9 for form a connecting structure revolveably connecting with the pylon 9. By using such diagonal drawbar, the connection between the booster airfoil and the center pylon is more stable and robust.

The various knightheads and main connector, T-joint connector, knighthead connector, etc. in the said support device are fabricated of aluminum profiles or aluminum castings. The support device made of lightweight aluminum profiles has such advantages as light weight and small resistance.

The preferred cross-section of the said knighthead or the various knighthead bodies in the single-knighthead section or the two-section type knighthead of the secondary knightheads is of ellipse and the long axis of such elliptical cross-section is placed in the horizontal direction.

Cross-section of the said diagonal drawbar may also be in elliptical form, and the long axis of such elliptical cross-section is placed in the horizontal direction.

The ratio of short axis to long axis of the said elliptical cross-section of the various knightheads is 1/2-3/4.

The various bearings provided on the said center pylon may be standard parts or simply different kinds of rolling bearing, for example, roller bearing, etc.

A controller may be connected on the starting component of the said drive unit for controlling the on/off of the drive unit. This mechanism transmits signal to the controller according to the wind direction indicator, which in turn gives command to the drive unit, enabling the revolving mechanism of the booster airfoil to synchronously rotate to the windward side or the leeward side, or rotate to the new windward side of the rotor as the wind direction changes. This controller may utilize PLC controller M340.

The said booster airfoil may be connected with the center pylon or other fixed frame near the wind turbine, for example, a tract may be placed on the ground outside the rotor of the wind turbine, and a support may be movably provided on the track, on which a plate or rotor type booster airfoil is fixed, and its relative positional relation with the rotor blades may be identical to the aforementioned situation, which functions to block the wind hindering the rotor from rotating from blowing onto the rotor blades. The support may be provided with traveling wheels which are connected with the drive unit and a braking device is installed on the drive unit. Turning on the said drive unit will enable the support to move along the track. When moved into the right place, the baking device installed on the drive unit can used for braking, enabling the support to be fixed in a set position.

There are too many devices available for fulfilling the fixation and displacement of the booster airfoil. The above implementation examples are only given for illustration purpose but by no means shall they constitute any limit of the present invention.

### Industrial applicability

The booster airfoil displacement mechanism of the vertical axis wind turbine of the present invention is used to change the position of the booster airfoil of a vertical axis wind turbine.

## Claims

1. A booster airfoil displacement mechanism of a vertical axis wind turbine, wherein, it includes a support device and a drive unit,
the said support device is provided on a fixed frame, also provided on the support device is a connecting structure of the said booster airfoil that is used for connecting the said booster airfoil and place it on the support device in a manner without blocking the rotation of the rotor on the said vertical axis wind turbine, and a wind shielding surface on the booster airfoil corresponds with one side surface of the rotor in the said vertical axis wind turbine, and such side surface is a part of the windward side of the rotor in use, the rotor blades in correspondence with this part of the windward surface suffer a rotational resistance due to the action of the air stream from the incoming wind, and the said booster airfoil enables such side surface to be shielded;
the said drive unit is placed on the said fixed frame, and it is also connected with the support device, making the said support device to displace, enabling the wind shielding surface of the said booster airfoil on it to shield different side surfaces of the said rotor.

2. The booster airfoil displacement mechanism of a vertical axis wind turbine of Claim 1, wherein, the said support device includes two knightheads, and one ends of which are respectively connected with the upper and lower ends of the said booster airfoil via the said connecting structure, and their lengths are so designed that the said booster airfoil is located outside the maximum rotating circumferential locus of the said rotor blade of the said wind turbine, while the other ends of the two knightheads are revolveably connected with a static center pylon of the said rotor of the said wind turbine, or the said fixed frame, through a revolveable connecting structure; and the said drive unit is connected with the said connecting structure revolveably connected with the said center pylon of one of the said knightheads in order to drive the said knighthead to rotate around the said center pylon; or,
the said support device is a support, on which a fixation structure is provided for the said booster airfoil, allowing the booster airfoil device to be placed on the support, the said support device is placed on the said fixed frame formed by the foundation near the rotor of the said vertical axis wind turbine, making the said booster airfoil to be outside the rotating circumferential locus of the said rotor blade; the said drive unit is installed on the said support or fixed frame, for driving the said support to displace in relation to the said foundation; or,
a controller is connected on the starting component of the said drive unit in order to control the on/off of the drive unit.

3. The booster airfoil displacement mechanism of a vertical axis wind turbine of Claim 1, wherein, the said knighthead includes two sections, of which the section near the said booster airfoil is a single knighthead section, one end of which is connected with the said booster airfoil, while the other section is a double-knighthead section comprising two secondary knightheads, and at one end of the these two secondary knightheads are provided with the said revolveable connecting structures for revolveable connection with the said center pylon; a T-joint connector is provided between the said single-knighthead section and the two secondary knightheads, and three connecting pieces are provided on this T-joint connector, which are distributed in Y-shape, one connecting piece on one side connects with the other end of the said single-knighthead section, and the other two connecting pieces on the other side of the T-joint connector are respectively connected with the other ends of the said two secondary knightheads.

4. The booster airfoil displacement mechanism of a vertical axis wind turbine of Claim 2 or 3, wherein, the connecting structure between the said knighthead and the said booster airfoil may be as such: the connecting structure includes one main connector on which two holes are provided, and the relevant end of the said knighthead or single-knighthead section is inserted and fixed in one of the holes while into the other hole is inserted and fixed the upper end or lower end of the said booster airfoil.

5. The booster airfoil displacement mechanism of a vertical axis wind turbine of Claim 2 or 3, wherein, the said support device may also comprise a diagonal drawbar, one end of which is provided a connecting structure that is fixed with the upper end of the said booster airfoil while the other end is provided with a revolveable connecting structure that is revolveably connected with the said center pylon, and the position of the connecting structure for connecting the said diagonal drawbar and the said center pylon is higher than the said connecting structure for connecting the knighthead connected at the upper end of the booster airfoil and the said center pylon.

6. The booster airfoil displacement mechanism of a vertical axis wind turbine of Claim 5, wherein, the said revolveable connecting structure connecting the said diagonal drawbar with the said center pylon is placed on the top of the said center pylon, which is a bearing assembly, and the inner race and one of the outer rings relatively revolveable in the bearing assembly are connected with the said center pylon while the other is used for connection with one end of the said diagonal drawbar, and the other end of the said diagonal drawbar is fixed with a main connector connecting the said knighthead and the upper end of the said booster airfoil.

7. The booster airfoil displacement mechanism of a vertical axis wind turbine of Claim 2, wherein, the said revolveable connecting structure connecting the said knighthead with the said center pylon is a bearing assembly, a outer sleeve is fixed on the outside of the said outer ring of the bearing assembly, in which a hole is provided, and the end of the said knighthead is inserted and fixed in the said hole.

8. The booster airfoil displacement mechanism of a vertical axis wind turbine of Claim 3, wherein, the said revolveable connecting structure connecting the said two secondary knightheads in the said knighthead with the said center pylon is a bearing assembly, and the said secondary knightheads are connected with the outer ring of the said bearing, and a outer sleeve is fixed on the outside of the said outer ring, in which two holes are provided, and the ends of the two said knightheads are inserted and fixed in the said holes.

9. The booster airfoil displacement mechanism of a vertical axis wind turbine defined by any of Claims 2, 3, 5 and 6, wherein, the cross-section of the said knighthead is an ellipse and the long axis of this elliptical cross-section is placed in the horizontal direction; or, the cross-section of the single-knighthead section and/or the secondary knighthead is an ellipse, and the long axis of this elliptical cross-section is placed in the horizontal direction; and/or the cross-section of the said diagonal drawbar is of an elliptical form, and the long axis of this elliptical cross-section is placed in the horizontal direction; or,
the material of the said support device is aluminum profile or aluminum casting.

10. The booster airfoil displacement mechanism of a vertical axis wind turbine of Claim 9, wherein, the ratio of short axis to long axis of the said elliptical cross-section of the various knightheads is 1/2~3/4.
